# EUROPEAN PATENT SPECIFICATION

(11) **EP 1 310 154 B1**
(45) Date of publication and mention of the grant of the patent: **19.12.2007**
(21) Application number: 02079345.1
(22) Date of filing: 18.10.2002
(51) Int. Cl.: A01F 15/07, B65B 11/04

(54) **Device for wrapping bodies, in particular bales of harvested material**
Vorrichtung zum Umhüllen von Körpern, insbesondere von Erntegutballen
Dispositif pour envelopper des corps, en particulier des balles agricoles

(30) Priority: 09.11.2001 EP 01204263
(43) Date of publication of application: 14.05.2003
(73) Proprietor: Welger Maschinenfabrik GmbH, 38304 Wolfenbüttel (DE)
(72) Inventor: Ramm, Christoph, 38106 Braunschweig (DE)

(56) References cited:
- EP-A- 0 233 471
- EP-A- 1 084 976
- EP-A- 1 090 543
- WO-A-98/41450
- DE-A- 3 737 973
- DE-A- 10 011 158
- GB-A- 1 452 013
- US-A- 4 682 038
- US-A- 4 694 714
- US-A- 5 651 511

## Description

The invention relates to a device for wrapping bodies, in particular harvested material bales according to the precharacterising clause of claim 1.

The above-described device may be derived from DE 200 15 540 U1. Herein, a switch element is arranged on the rotary arm. This switch element swivels radially outwards in the event of the film tearing off or reaching its end and interacts with a signal generator arranged stationarily in the circular path of revolution of the rotary arm. The advantage is that this device does not require any power to be transmitted by the upper rotary arm bearing arrangement, since the signal generator is arranged stationarily. However, a disadvantageous feature is the functional unreliability in the event of varying film tensions. Moreover, a relatively large number of special parts are required.

The following documents disclose further embodiments: US-A-4682038, DE-A-2435785, EP-A0924133 and WO-A-98/41450. In addition, film tear indicators for round baler/wrapper combinations of the type Rollant 250RC UNIWRAP, made by Claas and for example Type 65040 Kombi Göweil are commercially available. The latter require relatively complex power transmission systems between rotary arm and frame.

The object of the invention is to improve the above-described device and to develop a simple and in particular cheaper solution.

This object is achieved according to the invention by the features of the characterising portion of claim 1.

This solution according to the invention operates independently of the tension of the wrapping material, such that not only through-tears in the wrapping material web but also holes caused by overstretching of the film or partial tears may be detected, which none of the other known means can do. Moving parts are dispensed with due to the stationary mounting of the sensors, such that adjustment is easily feasible. Only low-cost standard elements are used, which may be particularly advantageously integrated into an electronic machine control system.

An advantageous embodiment consists in that the optical sensor takes the form of a one-way light barrier with a receiver on the one side of the wrapping material web portion and with a transmitter arranged in alignment with the received on the other side of the wrapping material web portion. Infrared transmitters have proven useful due to their insensitivity to dust.

A structurally particularly simple embodiment is provided by the use of a reflex sensor, which operates with reflected light or reflected sound waves and thereby detects whether a wrapping material web portion is present. Alternatively, X-rays or other light wavelengths may also be used.

For particular dusty operation, provision is made for one or more sensors to be associated with a cleaning device.

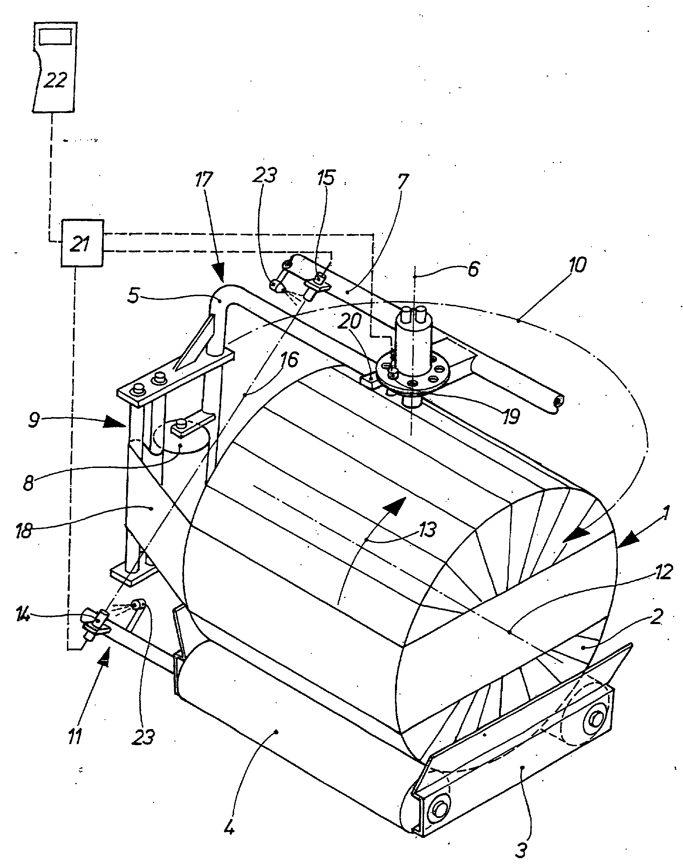

Further features and advantages of the invention are revealed by the remaining subclaims and by the following description of an exemplary embodiment, with reference to a single Figure providing a schematic illustration thereof.

The attached Figure shows a bale wrapper of known construction for wrapping a bale 1 of harvested material in film 2. The bale wrapper consists substantially of a stationary wrapping table 3 with drivable conveyor elements 4 and a wrapping device with a rotary arm 5, which is mounted on a frame 7 so as to be rotatable about a vertical axis of rotation 6 and carries at the lower end a film supply roll 8 as a wrapping material supply and a stretching unit 9.

During the wrapping process, the supply roll 8 is conveyed in a rotary motion with a direction of rotation 10 about the vertical axis 6 about the bale 1 of harvested material revolving about a horizontal axis of rotation 12 in a direction of rotation 13, wherein the film 2 is drawn off the supply roll 8 via the stretching unit 9 and wrapped round the bale 1 of harvested material. The drive of the bale 1 and the drive of the rotary arm 5 work in a particular transmission ratio to one another, such that the film plies wound around the bale 1 overlap due to simultaneous rotation of wrapping device and bale 1.

The novel feature is the arrangement of a light barrier 11, consisting of a transmitter 14 arranged stationarily on the wrapping table 3 and a receiver 15 arranged stationarily on the frame 6. The two sensors 14, 15 are aligned in a line 16, which runs, when the rotary arm 5 is in a particular position designated by the number 17, through the taut film portion 18 between supply roll 8 and bale 1. If the film tears or the supply roll 8 is used up, this is detected in that the light beam between transmitter 14 and receiver 15 is not interrupted. If the light beam between the transmitter 14 and receiver 15 of this light barrier arrangement 14, 15 is interrupted, the film portion 18 between bale 1 and supply roll 8 is in the taut state. An infrared (invisible) light is preferably emitted. However, the light may also be generated by a light-emitting diode, a laser or another illuminating means. Alternatively, sensors may also be used which operate for example with sound waves or X-rays.

The evaluation position 17 of the light barrier arrangement 14, 15 is fixed by a position sensor 19, which is arranged on the frame 7 and interacts with switch faces 20 on the rotary arm 5.
Transmitter 14, receiver 15 and the position sensor 19 are in active connection with evaluation electronics 21 and/or a control unit for the machine control system together with a display/operating unit 22 for the operator. The light barrier arrangement 14, 15 may be constantly supplied with power during the entire operation. The evaluation zone may be preset by the position sensor 19. When the rotary arm is in the position 17 shown, the position sensor 19 activates for example evaluation of the light barrier signals, such that a signal is produced if the film tears or is used up. After rotation of the rotary arm 5 by approximately 180° in the direction of arrow 10, the position sensor 19 again activates evaluation, but this time to check whether the transmitter 14/receiver 15 are functioning correctly or are soiled. When the rotary arm is in the first position 17, an alarm signal may for example be produced by means of the display/operating unit 22 or a signal be transmitted to the machine control system to interrupt the wrapping process immediately. In the second rotary arm position, not shown, the signal may be transmitted to the display/operating unit 22 or be used to activate a cleaning device 23 for transmitter 14/receiver 15, which may for example take the form of an air jet, a water jet or a mechanical cleaning element. As an alternative to evaluation of the second rotary arm position, transmitter 14/receiver 15 with soiling detectors may also be used, which transmit an alarm signal in the case of impending soiling or activate the cleaning device 23.

The invention and the advantages thereof may also be achieved in the same way for "rotary table systems", in which the bale turns simultaneously about a vertical and a horizontal axis. In this event, it is appropriate to use only a single sensor, namely a reflex sensor operating according to the light wave or sound wave principle.

## Claims

1. A device for wrapping bodies, in particular harvested material bales (1) of hay, straw or wilted green crop, at least one wrapping material web being drawn off from a wrapping material supply (8) during the wrapping process and a means being provided which signals a tear in the wrapping material web or that the wrapping material supply (8) has been used up, wherein at least one optical sensor (14, 15), ultrasonic sensor or sensor for electromagnetic waves/fields of different frequency ranges is associated with the wrapping material web portion (18) between wrapping material supply (8) and the body (1) and disposed stationarily, **characterised in that** the wrapping material supply (8) is arranged on a rotary arm (5) revolving round the harvested material bale (1) during the wrapping process and evaluation for tears in the wrapping material web portion (18) or full consumption of the wrapping material supply (8) is performed when the wrapping material web portion (18) runs through the working area of one or more of said sensors (14, 15).

2. A device according to claim 1, **characterised by** a position sensor (19, 20) for the rotary arm (5) and/or a timer, which is in active connection at least with the evaluation electronics (21) of one more sensors (14, 15)

## Patentansprüche

1. Vorrichtung zum Umhüllen von Körpern, insbesondere von Erntegutballen (1) aus Heu, Stroh oder angewelktem Grüngut, wobei während des Umhüllvorganges zumindest eine Umhüllmaterialbahn von einem Umhüllmaterialvorrat (8) abgezogen wird und eine Einrichtung vorgesehen ist, welche einen Riß der Umhüllmaterialbahn oder einen Aufbrauch des Umhüllmaterialvorrats (8) signalisiert, wobei dem Umhüllmaterialbahnabschnitt (18) zwischen Umhüllmaterialvorrat (8) und dem Körper (1) wenigstens ein optischer (14, 15), ein Ultraschall-Sensor oder ein Sensor für elektromagnetische Wellen/Felder anderer Frequenzbereiche zugeordnet und ortsfest angeordnet ist.**dadurch gekennzeichnet, daß** der Umhüllmaterialvorrat (8) an einem den Erntegutballen (1) während des Umhüllungsvorganges umkreisenden Dreharm (5) angeordnet ist und die Auswertung auf Riß des Umhüllmaterialbahnabschnittes (18) oder Aufbrauch des Umhüllmaterialvorrats (8) erfolgt, wenn der Umhüllmaterialbahnabschnitt (18) den Arbeitsbereich einer oder mehrerer Sensoren (14, 15) durchläuft.

2. Vorrichtung nach einem oder mehreren der vorhergehenden Ansprüche, **gekennzeichnet durch** einen Positionssensor (19, 20) für den Dreharm (5) und/oder ein Zeitglied, welcher/welches wenigstens mit der Auswerteelektronik (21) einer oder mehrerer Sensoren (14, 15) in Wirkverbindung steht.

## Revendications

1. Dispositif pour enrubanner des corps, en particulier des balles agricoles (1) de foin, de paille ou de cultures fourragères desséchées, au moins une bande de matériau d'enrubannage étant retirée d'une alimentation en matériau d'enrubannage (8) durant le processus d'enrubannage et un moyen étant fourni qui signale une déchirure dans la bande de matériau d'enrubannage ou que l'alimentation en matériau d'enrubannage (8) est épuisée, dans lequel au moins un capteur optique (14, 15), un capteur à ultrasons ou un capteur d'ondes/champs électromagnétiques de différentes plages de fréquence est associé à la partie de bande de matériau d'enrubannage (18) entre l'alimentation en matériau d'enrubannage (8) et le corps (1) et disposé de manière fixe, **caractérisé en ce que** l'alimentation en matériau d'enrubannage (8) est agencée sur un bras rotatif (5) tournant autour de la balle agricole (1) durant le processus d'enrubannage et l'évaluation des déchirures dans la partie de bande de matériau d'enrubannage (18) ou la consommation complète de l'alimentation en matériau d'enrubannage (8) est réalisée lorsque la partie de bande de matériau d'enrubannage (18) s'étend à travers la zone de travail d'un ou plusieurs desdits capteurs (14, 15).

2. Dispositif selon la revendication 1, **caractérisé par** un capteur de position (19, 20) pour le bras rotatif (5) et/ou une minuterie, qui est en liaison active au moins avec les éléments électroniques d'évaluation (21) d'un ou plusieurs capteurs (14, 15).
